# EUROPÄISCHE PATENTSCHRIFT

(11) **EP 3 571 380 B1**
(45) Veröffentlichungstag und Bekanntmachung des Hinweises auf die Patenterteilung: **29.01.2025**
(21) Anmeldenummer: 17816593.2
(22) Anmeldetag: 01.12.2017
(51) Int. Cl.: F01D 11/00, F01D 25/24, F02C 7/28

(54) **TURBINENGEHÄUSE UND VERFAHREN ZUR MONTAGE EINER TURBINE MIT EINEM TURBINENGEHÄUSES**
TURBINE CASING AND ASSEMBLY METHOD FOR A TURBINE WITH A TURBINE CASING
CARTER DE TURBINE ET UNE MÉTHODE D'ASSEMBLAGE D'UNE TURBINE AVEC UN CARTER DE TURBINE

(30) Priorität: 28.02.2017 DE 102017203210
(43) Veröffentlichungstag der Anmeldung: 27.11.2019
(73) Patentinhaber: Siemens Energy Global GmbH & Co. KG, 81739 München (DE)
(72) Erfinder: BLESSING, Alexander, 01157 Dresden (DE); ROLLE, Mario, 02829 Neißeaue (DE)
(86) Internationale Anmeldenummer: PCT/EP2017/081194
(87) Internationale Veröffentlichungsnummer: WO 2018/157957

(56) Entgegenhaltungen:
- EP-A1- 2 915 960
- EP-A1- 3 059 400
- EP-A1- 3 103 972
- WO-A1-2016/082956

## Beschreibung

Die vorliegende Erfindung betrifft ein mehrteiliges Turbinengehäuse, insbesondere für eine Dampfturbine, sowie ein Verfahren zur Montage eines mehrteiligen Turbinengehäuses, insbesondere für eine Dampfturbine.

Dampfturbinen sind Strömungsmaschinen, die zur Umwandlung der Enthalpie von Dampf in kinetische Energie ausgebildet sind. Herkömmliche Dampfturbinen weisen ein Turbinengehäuse auf, das einen Strömungsraum zum Durchströmen des Dampfes umgibt. Im Strömungsraum ist eine rotatorisch gelagerte Turbinenwelle mit einer Vielzahl von Laufschaufeln angeordnet, die in Form von hintereinander angeordneten Laufschaufelkränzen an der Turbinenwelle gehalten sind. Zur Optimierung der Anströmung der Laufschaufeln mit Dampf weisen Dampfturbinen Leitschaufelkränze auf, die jeweils einem Laufschaufelkranz vorgeschaltet und an dem Turbinengehäuse gehalten sind. Eine Gruppe aus einem Leitschaufelkranz mit zugehörigem Laufschaufelkranz wird auch als Turbinenstufe bezeichnet.

Beim Durchströmen der Dampfturbine gibt der Dampf einen Teil seiner inneren Energie ab, der über die Laufschaufeln in Rotationsenergie der Turbinenwelle umgewandelt wird. Hierbei findet eine Entspannung des Dampfes statt, so dass Druck und Temperatur des Dampfes beim Durchströmen der Dampfturbine nach jeder Turbinenstufe verringert werden. Das Turbinengehäuse wird somit zwischen einem Dampfeinlass und einem Dampfauslass einem Temperaturgradienten ausgesetzt. Dies führt insbesondere bei kompakt aufgebauten Dampfturbinen zu einer sehr hohen Belastung des Turbinengehäuses.

Zur Verbesserung des Wirkungsgrads weisen Dampfturbinen in speziellen Ausführungsformen einen mehrere Turbinenabschnitte, wie z.B. einen Hochdruckabschnitt, einen Mitteldruckabschnitt und/oder Niederdruckabschnitt, auf. Zur weiteren Verbesserung des Wirkungsgrads können derartige Dampfturbinen eine Heizvorrichtung zur Zwischenüberhitzung des Dampfes aufweisen, so dass beispielsweise den Hochdruckabschnitt verlassender Dampf von der Heizvorrichtung aufheizbar ist, bevor dieser den nachfolgenden Turbinenabschnitten zugeführt wird. Es kann dabei vorgesehen sein, dass jeweils zwischen zwei Turbinenabschnitten eine derartige Heizvorrichtung angeordnet ist. Insbesondere bei Dampfturbinen mit einer solchen Zwischenüberhitzung des Dampfes treten starke Temperaturschwankungen entlang einer Turbinenlängsachse der Dampfturbine auf. Zunächst fällt die Temperatur in dem Hochdruckabschnitt gradierend ab, steigt dann im Übergangsbereich aufgrund der Zwischenüberhitzung sprunghaft an. Ein Bereich des Turbinengehäuses, der einer Abströmung des Hochdruckabschnitts und einer Anströmung des folgenden Mitteldruckabschnitts oder Niederdruckabschnitts benachbart angeordnet ist, ist insbesondere bei kompakt aufgebauten Dampfturbinen besonders starken Temperaturunterschieden ausgesetzt.

Überdies weisen Turbinengehäuse aus Gründen besserer Herstellbarkeit sowie Montierbarkeit mehrere Gehäuseteile auf, die zu dem Turbinengehäuse unter Ausbildung von Trennfugen miteinander verbunden sind. Turbinengehäuse weisen dabei oftmals ein Gehäuseunterteil sowie ein Gehäuseoberteil auf. Auch entlang der Turbinenlängsachse kann das Turbinengehäuse mehrere Gehäusesegmente aufweisen, so dass der Hochdruckabschnitt und der Mitteldruckabschnitt beispielsweise in unterschiedlichen Gehäusesegmenten angeordnet sind. Die Verbindung erfolgt oftmals über ein Verschrauben von Vertikalflanschen, also Flanschen der Gehäuseteile bzw. Gehäusesegmente, wobei sich die Flansche auf einer Ebene quer zur Turbinenlängsachse ringförmig erstrecken.

Bei Turbinengehäusen, die beispielsweise mindestens ein vorderes Gehäusesegment mit einem ersten vorderen Gehäuseteilsegment und einem zweiten vorderen Gehäuseteilsegment sowie ein hinteres Gehäusesegment mit einem ersten hinteren Gehäuseteilsegment und einem zweiten hinteren Gehäuseteilsegment aufweisen, ist an einer Stoßstelle zwischen vier Gehäuseteilsegmenten eine Kreuzteilfuge ausgebildet. An Kreuzteilfugen von Turbinengehäusen treffen Vertikalflansche und Horizontalflansche aufeinander. Die Gewährleistung einer hohen Dampfdichtigkeit ist an solchen Kreuzteilfugen besonders problematisch. Durch hohe Temperaturbelastungen, wie z.B. Temperaturschwankungen, Temperaturgradienten oder Extremtemperaturen, sowie durch große Druckbelastungen, wie z.B. Druckschwankungen, Druckgradienten oder Extremdrücken, wird ein Risiko einer Undichtheit verbunden mit Ansaugen von Umgebungsluft ins Gehäuse bzw. Leckage des Arbeitsmediums an einer Kreuzteilfuge erhöht. Insbesondere durch hohe Überdrücke wird das Risiko von Leckagen an Kreuzteilfugen besonders erhöht.

Zur Vermeidung von Leckagen an Kreuzteilfugen gibt es mehrere unterschiedliche Lösungsansätze. Durch Erhöhung einer Schraubenkraft zum Verbinden der Flansche benachbarter Gehäuseteilsegmente sowie durch die Verwendung überdimensionierter Bauteile kann eine Dichtigkeit an Kreuzteilfugen verbessert werden. Nachteilig hierbei sind ein gesteigerter Materialsowie Montageaufwand und somit erhöhte Herstellungskosten des Turbinengehäuses. Alternativ oder zusätzlich können Betriebsparameter derart eingeschränkt werden, dass kritische Grenzwerte, welche zu einer übermäßigen Belastung der Kreuzteilfugen führen würden, vermieden werden. Durch diese Maßnahme werden eine Leistung und oftmals auch ein Wirkungsgrad der Turbine verringert.

Die WO 2016/082956 A1 offenbart zur Vermeidung von Leckagen an Kreuzteilfugen ein vertikal segmentiertes Turbinengehäuse bestehend aus zwei horizontal geteilten Teilsegmenten. Die EP 3 059 400 A1 offenbart eine ähnliche Verbindung zweier Vertikalflansche mit Dichtungsvorrichtung. Ein weiteres Beispiel ist aus der EP 2 915 960 bekannt.

Es ist daher die Aufgabe der vorliegenden Erfindung, ein Turbinengehäuse für eine Turbine sowie ein Verfahren zur Montage einer Turbine mit einem erfindungsgemäßen Turbinengehäuse zu schaffen, die die Nachteile des Stands der Technik beheben oder zumindest teilweise beheben. Es ist insbesondere die Aufgabe der vorliegenden Erfindung, ein Turbinengehäuse für eine Turbine, insbesondere eine Dampfturbine, sowie ein Verfahren zur Montage einer Turbine bereitzustellen, die mit einfachen Mitteln sowie kostengünstig eine verbesserte Dichtheit an Kreuzteilfugen gewährleisten.

Voranstehende Aufgabe wird durch die Patentansprüche gelöst. Demnach wird die Aufgabe durch ein Turbinengehäuse für eine Turbine, insbesondere eine Dampfturbine, gemäß Anspruch 1 gelöst. Ferner wird die voranstehende Aufgabe durch ein Verfahren zur Montage einer Turbine, insbesondere einer Dampfturbine, mit einem erfindungsgemäßen Turbinengehäuse gemäß Anspruch 10 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Turbinengehäuse beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch ein Turbinengehäuse für eine Turbine, insbesondere eine Dampfturbine, gelöst. Das Turbinengehäuse weist ein um eine Turbinenlängsachse herum ausgebildetes vorderes Gehäusesegment mit einem ersten vorderen Gehäuseteilsegment sowie einem zweiten vorderen Gehäuseteilsegment und ein um die Turbinenlängsachse herum ausgebildetes hinteres Gehäusesegment mit einem ersten hinteren Gehäuseteilsegment sowie einem zweiten hinteren Gehäuseteilsegment auf. Das hintere Gehäusesegment ist in Durchströmrichtung der Turbine hinter dem vorderen Gehäusesegment angeordnet sowie unter Ausbildung einer Kreuzteilfuge über einen hinteren Vertikalflansch des hinteren Gehäusesegments an einem vorderen Vertikalflansch des vorderen Gehäusesegments an dem vorderen Gehäusesegment befestigt. Erfindungsgemäß ist in einem Bereich des vorderen Vertikalflanschs ein die Turbinenlängsachse umgebender Vorsprung am vorderen Gehäusesegment ausgebildet, welcher sich parallel oder zumindest im Wesentlichen parallel zur Turbinenlängsachse erstreckt und den vorderen Vertikalflansch in Durchströmrichtung überragt. An einer der Turbinenlängsachse abgewandten Außenseite des Vorsprungs ist eine umlaufende Dichtungsvorrichtung angeordnet, die den Vorsprung gegen das hintere Gehäusesegment abdichtet.

Das vordere Gehäusesegment und das hintere Gehäusesegment sind um die Turbinenlängsachse herum, auf der vorzugsweise eine Rotorwelle der Turbine mit Laufschaufelkränzen koaxial anordenbar ist, ausgebildet. Durch die Aufteilung des Turbinengehäuses in Gehäusesegmente wird eine Montage sowie Demontage der Rotorwelle sowie weiterer Komponenten der Turbine, wie z.B. Lager, Dichtungen, Leitschaufelkränze oder dergleichen, verbessert bzw. gewährleistet und kann das Turbinengehäuse kostengünstiger hergestellt und transportiert werden. Die Turbinenlängsachse ist vorzugsweise auf einer horizontalen Ebene ausgebildet.

Das vordere Gehäusesegment weist einen vorderen Horizontalflansch auf, der sich parallel bzw. zumindest im Wesentlichen parallel zur Turbinenlängsachse erstreckt. Der vordere Horizontalflansch ist teilweise am ersten vorderen Gehäuseteilsegment sowie teilweise am zweiten vorderen Gehäuseteilsegment ausgebildet. Über den vorderen Horizontalflansch sind das erste vordere Gehäuseteilsegment und das zweite vordere Gehäuseteilsegment miteinander verbunden, insbesondere mittels Schrauben, Bolzen oder dergleichen. Das hintere Gehäusesegment weist einen hinteren Horizontalflansch auf, der sich parallel bzw. zumindest im Wesentlichen parallel zur Turbinenlängsachse erstreckt. Der hintere Horizontalflansch ist teilweise am ersten hinteren Gehäuseteilsegment sowie teilweise am zweiten hinteren Gehäuseteilsegment ausgebildet. Über den hinteren Horizontalflansch sind das erste hintere Gehäuseteilsegment und das zweite hintere Gehäuseteilsegment miteinander verbunden, insbesondere mittels Schrauben, Bolzen oder dergleichen. Unter einem Horizontalflansch wird im Rahmen der Erfindung ein Flansch verstanden, der sich auf einer Ebene erstreckt, auf der die Turbinenlängsachse verläuft oder zu der die Turbinenlängsachse zumindest parallel verläuft. Vorzugsweise ist diese Ebene horizontal ausgerichtet, kann gleichwohl je nach Ausführungsform der Turbine eine Neigung zwischen 0° und 90° zur Horizontalebene aufweisen.

Das vordere Gehäusesegment weist einen vorderen Vertikalflansch auf, der dem hinteren Gehäusesegment zugewandt sowie diesem benachbart ist und sich in Bezug auf die Durchströmrichtung in radialer Richtung erstreckt. Der vordere Vertikalflansch ist teilweise am ersten vorderen Gehäuseteilsegment sowie teilweise am zweiten vorderen Gehäuseteilsegment ausgebildet. Dementsprechend weist das hintere Gehäusesegment einen hinteren Vertikalflansch auf, der dem vorderen Gehäusesegment zugewandt sowie diesem benachbart ist und sich in Bezug auf die Durchströmrichtung in radialer Richtung erstreckt. Der hintere Vertikalflansch ist teilweise am ersten hinteren Gehäuseteilsegment sowie teilweise am zweiten hinteren Gehäuseteilsegment ausgebildet. Das vordere Gehäusesegment ist über den vorderen Vertikalflansch und den hinteren Vertikalflansch mit dem hinteren Gehäusesegment verbunden, insbesondere mittels Schrauben, Bolzen oder dergleichen. Ein Vertikalflansch ist im Rahmen der Erfindung ein Flansch, der sich auf einer Ebene erstreckt, die vorzugsweise senkrecht zur Turbinenlängsachse ausgebildet ist: Es kann je nach Ausführungsform vorgesehen sein, dass diese Ebene um eine Achse, die horizontal sowie quer zur Turbinenlängsachse verläuft, um zwischen 0° und 90° geneigt ist.

Der Vorsprung ist vorzugsweise als Verlängerung des vorderen Gehäuseteilsegments ausgebildet, die in Durchströmrichtung den vorderen Vertikalflansch überragt. Eine Wandstärke des Vorsprungs ist vorzugsweise geringer ausgebildet als eine Wandstärke bzw. mittlere Wandstärke des vorderen Gehäuseteilsegments. Dies hat den Vorteil, dass ein direktes Anströmen einer Trennfuge zwischen dem vorderen Vertikalflansch und dem hinteren Vertikalflansch durch ein in Durchströmrichtung bzw. im Wesentlichen in Durchströmrichtung strömendes Betriebsfluid der Turbine auf diese Weise verhinderbar ist. Die Außenseite des Vorsprungs ist von der Turbinenlängsachse abgewandt sowie in radialer Richtung von dem hinteren Gehäusesegment umgeben.

Die an der Außenseite angeordnete Dichtungsvorrichtung umgibt die Turbinenlängsachse vollständig. Die Dichtungsvorrichtung verschließt einen Spalt, der zwischen dem Vorsprung und dem hinteren Gehäusesegment ausgebildet ist, und dichtet somit einen Turbinengehäuseinnenraum gegenüber der Kreuzteilfuge ab. Ein Bereich der Dichtungsvorrichtung ist vorzugsweise gemäß einer bekannten Kolbendichtung ausgebildet. Es kann im Rahmen der Erfindung vorgesehen sein, dass die Dichtungsvorrichtung an dem Vorsprung oder dem hinteren Gehäusesegment fixiert ist.

Vorzugsweise ist ein Befestigungslochkreisdurchmesser größer als ein Vorsprungaußendurchmesser des Vorsprungs ausgebildet. Somit sind Verbindungsstellen des vorderen Vertikalflanschs mit dem hinteren Vertikalflansch durch den Vorsprung gegenüber dem Turbinengehäuseinnenraum abgedeckt.

Ein erfindungsgemäßes Turbinengehäuse hat gegenüber herkömmlichen Turbinengehäusen den Vorteil, dass es, insbesondere aufgrund des Vorsprungs sowie der Dichtungsanordnung, an der Kreuzteilfuge eine besonders zuverlässige bzw. hohe Dichtheit aufweist. Ein weiterer Vorteil ist, dass das erfindungsgemäße Turbinengehäuse besonders für kleine und/oder kompakte Turbinen geeignet sowie für verhältnismäßig extreme Betriebsparameter, insbesondere hohe Überdrücke sowie hohe Temperaturen, auslegbar ist.

Gemäß einer bevorzugten Weiterbildung der Erfindung kann bei einem Turbinengehäuse vorgesehen sein, dass der Vorsprung hohlzylinderförmig bzw. im Wesentlichen hohlzylinderförmig oder hohlkonusförmig bzw. im Wesentlichen hohlkonusförmig ausgebildet ist. Ein derartiger Vorsprung weist einen ringförmigen Querschnitt auf. Bei einem hohlkonusförmigen Vorsprung ist der Konus vorzugsweise auf der Außenseite als Außenkonus ausgebildet. Dabei ist der Außenkonus vorzugsweise derart ausgebildet, dass beim Zusammenfügen des vorderen Gehäusesegments mit dem hinteren Gehäusesegment eine Druckkraft über den Außenkonus aufbaubar ist, die über die Dichtungsvorrichtung weiterleitbar ist. Weiter bevorzugt ist auf einer Innenseite des hinteren Gehäusesegments ein Innenkonus ausgebildet, der beim Zusammenfügen des vorderen Gehäusesegments mit dem hinteren Gehäusesegment mit dem Außenkonus in Eingriff bringbar ist. Auf diese Weise ist eine Dichtheit des Turbinengehäuses mit einfachen Mitteln weiter verbesserbar. Ein erfindungsgemäßer Vorsprung hat überdies den Vorteil, dass eine Kontaktfuge zwischen dem vorderen Vertikalflansch und dem hinteren Vertikalflansch vollumfänglich bzw. im Wesentlichen vollumfänglich abgedeckt ist.

Weiter bevorzugt ist die Dichtungsvorrichtung derart angeordnet und ausgebildet, den Vorsprung gegen den hinteren Vertikalflansch abzudichten. Der Vorsprung und der hintere Vertikalflansch bilden somit einen gemeinsamen Überlappungsbereich. Dabei ist es bevorzugt, dass der Vorsprung den hinteren Vertikalflansch vollständig bzw. zumindest im Wesentlichen vollständig überlappt. Alternativ kann vorgesehen sein, dass der Vorsprung den hinteren Vertikalflansch teilweise überlappt oder in Durchströmrichtung über diesen hinausragt. Eine derartige Anordnung der Dichtungsvorrichtung hat den Vorteil, dass aufgrund einer besonders hohen Stabilität des hinteren Gehäusesegments im Bereich des hinteren Vertikalflanschs somit eine besonders gute Dichtungswirkung erzielbar ist.

Vorzugsweise ist in der Außenseite des Vorsprungs mindestens eine umlaufende Nut ausgebildet. Die Dichtungsvorrichtung weist mindestens einen Dichtungsring auf, der mindestens ein erstes Ringsegment und ein zweites Ringsegment aufweist. Der mindestens eine Dichtungsring ist zumindest teilweise in der mindestens einen Nut aufgenommen und kontaktiert das hintere Gehäusesegment in radialer Richtung in Bezug auf die Turbinenlängsachse abdichtend. Es kann im Rahmen der Erfindung vorgesehen sein, dass die mindestens eine Nut auf der Innenseite des hinteren Gehäusesegments ausgebildet und der Dichtungsring zumindest teilweise in der mindestens einen Nut aufgenommen ist und die Außenseite des Vorsprungs abdichtend kontaktiert. Alternativ können die Außenseite des Vorsprungs und die Innenseite des hinteren Gehäusesegments jeweils mindestens eine Nut aufweisen, in der die Dichtungsvorrichtung zumindest teilweise angeordnet ist und somit abdichtend am Vorsprung sowie hinteren Gehäusesegment angeordnet ist. Zur Verbesserung der Dichtheit können mehrere Nuten mit mehreren Dichtringen vorgesehen sein. Eine Nut hat den Vorteil, dass die Dichtungsvorrichtung mit einfachen Mitteln sowie kostengünstig gegen ein axiales Verschieben entlang der Turbinenlängsachse sicherbar ist. Ferner ist mittels einer Nut eine verbesserte Dichtwirkung erzielbar.

Ferner ist bevorzugt, dass das mindestens eine erste Ringsegment und das mindestens eine zweite Ringsegment zur Ausbildung eines gasdichten Stoßes einander in Umfangsrichtung zumindest teilweise überlappende Endbereiche aufweisen, die vorzugsweise gemäß herkömmlicher Kolbenringe ausgebildet sind. Überlappende Endbereiche haben den Vorteil, dass durch einen höheren Druck auf der einen Seite als auf der in Turbinenlängsachse gesehen anderen Seite eine optimale Dichtwirkung erzielbar ist und Durchmesseränderungen ausgeglichen werden können.

Es kann erfindungsgemäß vorgesehen sein, dass mindestens ein erster Endbereich des mindestens einen ersten Ringsegments mindestens eine in Umfangsrichtung ausgebildete Aussparung aufweist, und dass mindestens ein zweiter Endbereich des mindestens einen zweiten Ringsegments mindestens eine in Umfangsrichtung hervorstehende Zunge aufweist, wobei die mindestens eine Zunge zum formschlüssigen Eingriff in die mindestens eine Aussparung ausgebildet ist. Vorzugsweise sind die Endbereiche derart ausgebildet, dass beim Zusammenfügen ein formschlüssiges Zentrieren der Ringsegmente erfolgt. Mittels einer derartigen Ausbildung sind Ringsegmente leicht miteinander zu einem Dichtring unter Ausbildung einer guten Abdichtung zusammenfügbar.

Es ist bevorzugt, dass der mindestens eine Dichtungsring einen Ringaußendurchmesser aufweist, der zumindest in einem entlasteten Zustand größer als ein hinterer Gehäusesegmentinnendurchmesser des hinteren Gehäusesegments ist. Ein entlasteter Zustand des Ringes ist im Rahmen der Erfindung ein Zustand, in dem der Ring nicht gezwängt wird. Sobald er eingebaut wird, kann er auf einen etwas kleineren Durchmesser gebracht werden, auch wenn kein Arbeitsfluid die Turbine durchströmt und ein Innendruck der Turbine einem Umgebungsdruck entspricht. Dabei ist das Übermaß des Ringaußendurchmessers derart, dass eine Montage der Gehäusesegmente mit Dichtungsring weiterhin uneingeschränkt möglich ist. Aufgrund des größeren Durchmessers des Dichtungsrings bildet dieser im zusammengefügten Zustand der Gehäusesegmente einen Pressverbund. Hierdurch wird eine hohe Dichtheit des Turbinengehäuses sichergestellt.

In einer vorteilhaften Ausgestaltung der Erfindung ist in dem hinteren Vertikalflansch eine Bohrung ausgebildet, die einen Zwischenraum, der zwischen der Dichtungsvorrichtung und dem vorderen Vertikalflansch ausgebildet ist, mit einem zweiten Innenraumbereich des hinteren Gehäusesegments fluidkommunizierend verbindet. Der zweite Innenraumbereich ist in Durchströmrichtung hinter einem dem vorderen Gehäusesegment unmittelbar benachbarten ersten Innenraumbereich innerhalb des hinteren Gehäusesegments angeordnet. Die Turbine durchströmendes Arbeitsfluid durchströmt somit erst den ersten Innenraumbereich und strömt anschließend weiter in den zweiten Innenraumbereich. Die Bohrung ist vorzugsweise in einer Wand des hinteren Gehäuseteilsegments ausgebildet. Alternativ kann an der Bohrung auch eine Rohrleitung angeordnet sein, die die Bohrung mit dem zweiten Innenraumbereich fluidkommunizierend verbindet. Eine Bohrung hat den Vorteil, dass in den Zwischenraum eindringendes Arbeitsfluid, also Arbeitsfluid, welches die Dichtungsvorrichtung überwunden hat, von einer Teilfuge zwischen dem vorderen Vertikalflansch und dem hinteren Vertikalflansch sowie einer Teilfuge zwischen dem ersten Horizontalflansch und dem zweiten Horizontalflansch wegleitbar ist. Hierdurch kann ein unbeabsichtigtes Ansaugen von Luft in das hintere Gehäusesegment vermieden werden.

Weiter bevorzugt sind das erste vordere Gehäuseteilsegment als Hochdruckturbinengehäuseunterteil eines Hochdruckteils des Turbinengehäuses, das zweite vordere Gehäuseteilsegment als Hochdruckturbinengehäuseoberteil des Hochdruckturbinengehäuses, das erste hintere Gehäuseteilsegment als Abdampfgehäuseunterteil eines Abdampfgehäuses des Turbinengehäuses und das zweite hintere Gehäuseteilsegment als Abdampfgehäuseoberteil des Abdampfgehäuses ausgebildet. Herkömmliche Turbinen weisen eine derartige Aufteilung der Gehäuseteilsegmente auf, da durch diese sowohl eine einfache Montage bzw. Demontage sowie ein sicherer Betrieb der Turbine gewährleistet sind.

Gemäß einem zweiten Aspekt der Erfindung wird die Aufgabe erfindungsgemäß durch ein Verfahren zur Montage einer Turbine mit einem erfindungsgemäßen Turbinengehäuse gelöst. Das Verfahren weist die folgenden Schritte auf:
- Einlegen des ersten Ringsegments des Dichtungsrings in die Nut des Vorsprungs des Hochdruckturbinengehäuseunterteils,
- Verbinden des Hochdruckturbinengehäuseunterteils mit dem Abdampfgehäuseunterteil zu einem Gehäuseunterteil,
- Einsetzen von Innenbauteilen der Turbine in das Gehäuseunterteil,
- Einlegen des zweiten Ringsegments des Dichtungsrings in die Nut des Vorsprungs des Hochdruckturbinengehäuseoberteils,
- Verbinden des Hochdruckturbinengehäuseoberteils mit dem Abdampfgehäuseoberteil zu einem Gehäuseoberteil und
- Ablegen des Gehäuseoberteils auf dem Gehäuseunterteil.

Das erste Ringsegment des Dichtungsrings wird in die Nut des Vorsprungs des Hochdruckturbinengehäuseunterteils eingelegt und gegen ein Herausfallen gesichert. Vorzugsweise wird das erste Ringsegment in der Nut lösbar fixiert, insbesondere mittels einer Schraub- oder Klebverbindung. Die Klebverbindung hat vorzugsweise derartige Eigenschaften, dass sie sich unter Temperatur im ersten Betrieb der Turbine löst. Das Einlegen erfolgt vorzugsweise derart, dass die Endbereiche des ersten Ringsegments dem Horizontalflansch des Hochdruckturbinengehäuseunterteils benachbart, insbesondere gleichermaßen benachbart, sind.

Das Hochdruckturbinengehäuseunterteil wird anschließend mit dem Abdampfgehäuseunterteil zu dem Gehäuseunterteil verbunden. Das erste Ringsegment wird dabei zur Herstellung einer Abdichtung mit dem Abdampfgehäuseunterteil in Eingriff gebracht. Das Verbinden erfolgt über die an dem Hochdruckturbinengehäuseunterteil sowie dem Abdampfgehäuseunterteil ausgebildeten Vertikalflansche, insbesondere mittels Schrauben, Bolzen oder dergleichen. Es ist bevorzugt, dass beim Zusammenführen von Hochdruckturbinengehäuseunterteil und Abdampfgehäuseunterteil mindestens eine Zentrierstange verwendet wird, um Hochdruckturbinengehäuseunterteil und Abdampfgehäuseunterteil optimal zueinander auszurichten. Vorzugsweise werden hierfür mindestens zwei Zentrierstangen verwendet.

Das Einsetzen der Innenbauteile der Turbine in das Gehäuseunterteil erfolgt vorzugsweise derart, dass eine Rotorlängsachse auf der Turbinenlängsachse angeordnet wird. Die Innenbauteile können sowohl am Hochdruckturbinengehäuseunterteil als auch am Abdampfgehäuseunterteil angeordnet werden. Es ist erfindungsgemäß bevorzugt, dass zumindest ein Teil der Innenbauteile am Gehäuseunterteil lösbar fixiert wird.

Das zweite Ringsegment des Dichtungsrings wird in die Nut des Vorsprungs des Hochdruckturbinengehäuseoberteils eingelegt und gegen ein Herausfallen gesichert. Vorzugsweise wird das zweite Ringsegment in der Nut lösbar fixiert, insbesondere mittels einer Schraub- oder Klebverbindung. Die Klebverbindung hat vorzugsweise derartige Eigenschaften, dass sie sich unter Temperatur im ersten Betrieb der Turbine löst. Das Einlegen erfolgt vorzugsweise derart, dass die Endbereiche des zweiten Ringsegments dem Horizontalflansch des Hochdruckturbinengehäuseoberteils benachbart, insbesondere gleichermaßen benachbart, sind.

Das Hochdruckturbinengehäuseoberteil wird anschließend mit dem Abdampfgehäuseoberteil zu dem Gehäuseoberteil verbunden. Das zweite Ringsegment wird dabei zur Herstellung einer Abdichtung mit dem Abdampfgehäuseoberteil in Eingriff gebracht. Das Verbinden erfolgt über die an dem Hochdruckturbinengehäuseoberteil sowie dem Abdampfgehäuseoberteil ausgebildeten Vertikalflansche, insbesondere mittels Schrauben, Bolzen oder dergleichen. Es ist bevorzugt, dass beim Zusammenführen von Hochdruckturbinengehäuseoberteil und Abdampfgehäuseoberteil mindestens eine Zentrierstange verwendet wird, um Hochdruckturbinengehäuseoberteil und Abdampfgehäuseoberteil optimal zueinander auszurichten. Vorzugsweise werden hierfür mindestens zwei Zentrierstangen verwendet.

Das Gehäuseoberteil wird in einem folgenden Verfahrensschritt auf dem Gehäuseunterteil abgelegt und an diesem lösbar fixiert. Beim Ablegen werden Gehäuseoberteil und Gehäuseunterteil relativ zueinander ausgerichtet, vorzugsweise mittels mindestens einer Zentrierstange. Vorzugsweise werden hierfür mindestens zwei Zentrierstangen verwendet. Weiter bevorzugt ist das Gehäuseunterteil lagekonstant angeordnet, so dass beim Ausrichten und Ablegen lediglich das Gehäuseoberteil bewegt wird.

Das erfindungsgemäße Verfahren zur Montage einer Turbine mit einem erfindungsgemäßen Turbinengehäuse weist dieselben Vorteile auf, wie bereits voranstehend zu einem Turbinengehäuse gemäß dem ersten Aspekt der Erfindung beschrieben sind. Demnach hat das erfindungsgemäße Verfahren den Vorteil, dass mit einfachen Mitteln sowie kostengünstig eine Turbine mit einem Turbinengehäuse montierbar ist, welches im Bereich der Kreuzteilfuge des Turbinengehäuses eine besonders hohe und zuverlässige Dichtheit aufweist. Das erfindungsgemäße Verfahren ist insbesondere für die Montage kleiner und/oder kompakter Turbinen geeignet, die unter verhältnismäßig extremen Betriebsparametern, insbesondere hohen Überdrücken sowie hohe Temperaturen, betreibbar sind und dabei eine hohe Dichtheit aufweisen.

Ein erfindungsgemäßes Turbinengehäuse sowie ein erfindungsgemäßes Verfahren werden nachfolgend anhand von Zeichnungen näher erläutert. Es zeigen jeweils schematisch:
- Figur 1: in einer Seitenansicht eine bevorzugte erste Ausführungsform eines erfindungsgemäßen Turbinengehäuses,
- Figur 2: im Längsschnitt einen vergrößerten Ausschnitt des Turbinengehäuses aus Fig. 1,
- Figur 3: im Längsschnitt einen vergrößerten Ausschnitt einer bevorzugten zweiten Ausführungsform eines erfindungsgemäßen Turbinengehäuses,
- Figur 4: in einer Draufsicht einen bevorzugten Dichtungsring und
- Figur 5: einen vergrößerten Ausschnitt von Endbereichen des Dichtungsrings aus Fig. 4.

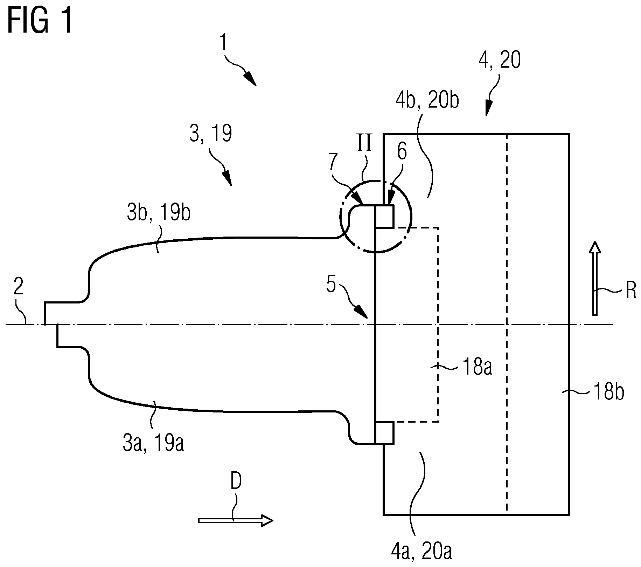

In Fig. 1 ist eine bevorzugte erste Ausführungsform eines erfindungsgemäßen Turbinengehäuses 1 schematisch in einer Seitenansicht dargestellt. Das Turbinengehäuse 1 erstreckt sich entlang einer Turbinenlängsachse 2 und weist ein als Hochdruckturbinengehäuse 19 ausgebildetes vorderes Gehäusesegment 3 sowie ein als Abdampfgehäuse 20 ausgebildetes hinteres Gehäusesegment 4 auf. Das hintere Gehäusesegment 4 ist in Durchströmrichtung D des Turbinengehäuses 1 hinter dem vorderen Gehäusesegment 3 angeordnet. Das vordere Gehäusesegment 3 weist ein als Hochdruckturbinengehäuseunterteil 19a ausgebildetes erstes vorderes Gehäuseteilsegment 3a sowie ein als Hochdruckturbinengehäuseoberteil 19b ausgebildetes zweites vorderes Gehäuseteilsegment 3b auf. Das erste vordere Gehäuseteilsegment 3a und das zweite vordere Gehäuseteilsegment 3b sind über einen nicht dargestellten Horizontalflansch, der teilweise auf dem ersten vorderen Gehäuseteilsegment 3a und teilweise auf dem zweiten vorderen Gehäuseteilsegment 3b ausgebildet ist, miteinander lösbar verbunden. Das hintere Gehäusesegment 4 weist ein als Abdampfgehäuseunterteil 20a ausgebildetes erstes hinteres Gehäuseteilsegment 4a sowie ein als Abdampfgehäuseoberteil 20b ausgebildetes zweites hinteres Gehäuseteilsegment 4b auf. Das erste hintere Gehäuseteilsegment 4a und das zweite hintere Gehäuseteilsegment 4b sind über einen nicht dargestellten Horizontalflansch, der teilweise auf dem ersten hinteren Gehäuseteilsegment 4a und teilweise auf dem zweiten hinteren Gehäuseteilsegment 4b ausgebildet ist, miteinander lösbar verbunden. Das hintere Gehäusesegment 4 weist einen ersten Innenraumbereich 18a und einen zweiten Innenraumbereich 18b auf, wobei der zweite Innenraumbereich 18b in Durchströmrichtung D hinter dem ersten Innenraumbereich 18a angeordnet ist.

An einem in Durchströmrichtung D hinteren Ende weist das vordere Gehäusesegment 3 einen umlaufenden vorderen Vertikalflansch 7 auf, der die Turbinenlängsachse 2 umgibt und vorzugsweise lediglich im Bereich der Übergänge zwischen dem ersten vorderen Gehäuseteilsegment 3a und dem zweiten vorderen Gehäuseteilsegment 3b Trennfugen aufweist. An einem in Durchströmrichtung D vorderen Ende weist das hintere Gehäusesegment 4 einen umlaufenden hinteren Vertikalflansch 6 auf, der die Turbinenlängsachse 2 umgibt und vorzugsweise lediglich im Bereich der Übergänge zwischen dem ersten hinteren Gehäuseteilsegment 4a und dem zweiten hinteren Gehäuseteilsegment 4b Trennfugen aufweist. In einem Bereich, der dem ersten vorderen Gehäuseteilsegment 3a, dem zweiten vorderen Gehäuseteilsegment 3b, dem ersten hinteren Gehäuseteilsegment 4a und dem zweiten hinteren Gehäuseteilsegment 4b benachbart ist, ist eine Kreuzteilfuge 5 ausgebildet.

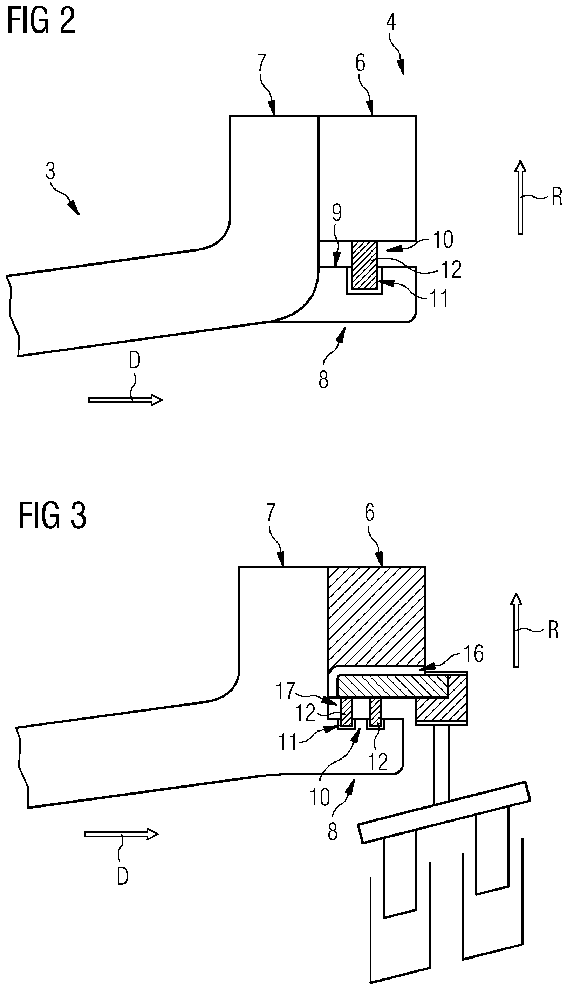

In Fig. 2 ist ein vergrößerter Ausschnitt des Turbinengehäuses 1 aus Fig. 1 schematisch dargestellt. In dieser Ansicht ist erkennbar, dass am vorderen Vertikalflansch 7 des vorderen Gehäusesegments 3 ein Vorsprung 8 ausgebildet ist, der sich in Durchströmrichtung D über eine Breite des hinteren Vertikalflanschs 6 des hinteren Gehäusesegments 4 erstreckt. An einer von der Turbinenlängsachse 2 (vgl. Fig. 1) abgewandten Außenseite 9 weist der Vorsprung 8 eine Nut 11 auf, in der ein Dichtungsring 12 einer Dichtungsvorrichtung 10 angeordnet und fixiert ist. Der Dichtungsring 12 erstreckt sich in radialer Richtung R und kontaktiert den hinteren Vertikalflansch 6. Somit ist eine vertikale Trennfuge zwischen dem vorderen Vertikalflansch 7 und dem hinteren Vertikalflansch 6 zu einem Innenraum des Turbinengehäuses 1 abgedichtet. Erfindungsgemäß können auch mehrere Dichtungsringe 12 vorgesehen sein.

Fig. 3 zeigt schematisch einen vergrößerten Ausschnitt einer bevorzugten zweiten Ausführungsform eines erfindungsgemäßen Turbinengehäuses 1. In dieser zweiten Ausführungsform ist eine parallel zur Durchströmrichtung D verlaufende Bohrung 16 ausgebildet, die in einen Zwischenraum 17 mündet, welcher zwischen der Dichtungsvorrichtung 10 und dem vorderen Vertikalflansch 7 ausgebildet ist. Über die Bohrung 16 ist Arbeitsfluid ableitbar, welches an der Dichtungsvorrichtung 10 vorbei gelangt ist. Ein weiteres Ende der Bohrung 16 mündet in den zweiten Innenraumbereich 18b des hinteren Gehäusesegments 4. Die Dichtungsvorrichtung 10 weist in diesem Beispiel zwei Dichtungsringe 12 auf, die jeweils in einer Nut 11 der Außenseite 9 des Vorsprungs 8 angeordnet sind. Erfindungsgemäß können ein oder mehrere Dichtungsringe 12 vorgesehen sein.

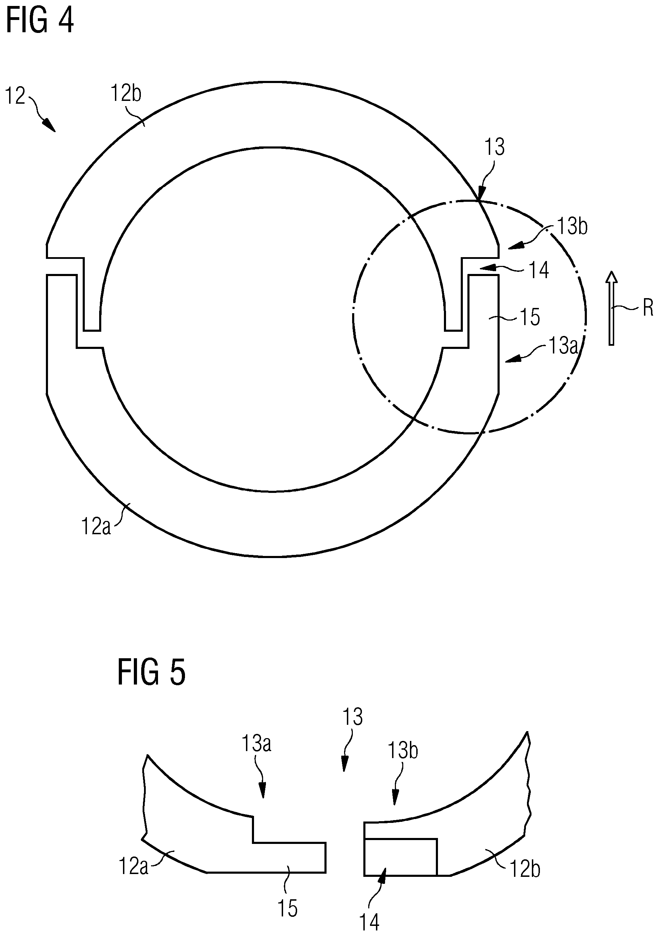

Fig. 4 und Fig. 5 zeigen einen bevorzugten Dichtungsring 12 bzw. einen Ausschnitt des Dichtungsrings 12 in einer Draufsicht in Durchströmrichtung D. Der Dichtungsring 12 weist ein erstes Ringsegment 12a sowie ein zweites Ringsegment 12b auf, die in Endbereichen 13 miteinander unter Ausbildung eines gasdichten Stoßes miteinander verbunden bzw. verbindbar sind. Ein erster Endbereich 13a des ersten Ringsegments 12a weist eine Zunge 15 auf, die zum formschlüssigen Eingreifen in einer Aussparung 14 eines zweiten Endbereichs 13b des zweiten Ringsegments 12b ausgebildet ist.

### Bezugszeichenliste

- 1: Turbinengehäuse
- 2: Turbinenlängsachse
- 3: vorderes Gehäusesegment
- 3a: erstes vorderes Gehäuseteilsegment
- 3b: zweites vorderes Gehäuseteilsegment
- 4: hinteres Gehäusesegment
- 4a: erstes hinteres Gehäusesegment
- 4b: zweites hinteres Gehäusesegment
- 5: Kreuzteilfuge
- 6: hinterer Vertikalflansch
- 7: vorderer Vertikalflansch
- 8: Vorsprung
- 9: Außenseite
- 10: Dichtungsvorrichtung
- 11: Nut
- 12: Dichtungsring
- 12a: erstes Ringsegment
- 12b: zweites Ringsegment
- 13: Endbereich
- 13a: erster Endbereich
- 13b: zweiter Endbereich
- 14: Aussparung
- 15: Zunge
- 16: Bohrung
- 17: Zwischenraum
- 18a: erster Innenraumbereich
- 18b: zweiter Innenraumbereich
- 19: Hochdruckturbinengehäuse
- 19a: Hochdruckturbinengehäuseunterteil
- 19b: Hochdruckturbinengehäuseoberteil
- 20: Abdampfgehäuse
- 20a: Abdampfgehäuseunterteil
- 20b: Abdampfgehäuseoberteil
- D: Durchströmrichtung
- R: radiale Richtung

## Patentansprüche

1. Turbinengehäuse (1) für eine Turbine, insbesondere eine Dampfturbine, aufweisend ein um eine Turbinenlängsachse (2) herum ausgebildetes vorderes Gehäusesegment (3) mit einem ersten vorderen Gehäuseteilsegment (3a) sowie einem zweiten vorderen Gehäuseteilsegment (3b) und ein um die Turbinenlängsachse (2) herum ausgebildetes hinteres Gehäusesegment (4) mit einem ersten hinteren Gehäuseteilsegment (4a) sowie einem zweiten hinteren Gehäuseteilsegment (4b), wobei das hintere Gehäusesegment (4) in Durchströmrichtung (D) hinter dem vorderen Gehäusesegment (3) angeordnet sowie unter Ausbildung einer Kreuzteilfuge (5) über einen hinteren Vertikalflansch (6) des hinteren Gehäusesegments (4) an einem vorderen Vertikalflansch (7) des vorderen Gehäusesegments (3) an dem vorderen Gehäusesegment (3) befestigt ist, wobei
in einem Bereich des vorderen Vertikalflanschs (7) ein die Turbinenlängsachse (2) umgebender Vorsprung (8) am vorderen Gehäusesegment (3) ausgebildet ist, welcher sich parallel oder zumindest im Wesentlichen parallel zur Turbinenlängsachse (2) erstreckt und den vorderen Vertikalflansch (7) in Durchströmrichtung (D) überragt,
**dadurch gekennzeichnet,**
**dass** an einer der Turbinenlängsachse (2) abgewandten Außenseite (9) des Vorsprungs (8) eine umlaufende Dichtungsvorrichtung (10) angeordnet ist, die den Vorsprung (8) gegen das hintere Gehäusesegment (4) abdichtet.

2. Turbinengehäuse (1) nach Anspruch 1,
**dadurch gekennzeichnet,**
**dass** der Vorsprung (8) hohlzylinderförmig bzw. im Wesentlichen hohlzylinderförmig oder hohlkonusförmig bzw. im Wesentlichen hohlkonusförmig ausgebildet ist.

3. Turbinengehäuse (1) nach Anspruch 1 oder 2,
**dadurch gekennzeichnet,**
**dass** die Dichtungsvorrichtung (10) derart angeordnet und ausgebildet ist, den Vorsprung (8) gegen den hinteren Vertikalflansch (6) abzudichten.

4. Turbinengehäuse (1) nach einem der vorangegangenen Ansprüche,
**dadurch gekennzeichnet,**
**dass** in der Außenseite (9) des Vorsprungs (8) mindestens eine umlaufende Nut (11) ausgebildet ist, wobei die Dichtungsvorrichtung (10) mindestens einen Dichtungsring (12) aufweist, der mindestens ein erstes Ringsegment (12a) und ein zweites Ringsegment (12b) aufweist, wobei der mindestens eine Dichtungsring (12) zumindest teilweise in der mindestens einen Nut (11) aufgenommen ist und das hintere Gehäusesegment (4) in radialer Richtung (R) in Bezug auf die Turbinenlängsachse (2) abdichtend kontaktiert.

5. Turbinengehäuse (1) nach Anspruch 4,
**dadurch gekennzeichnet,**
**dass** das mindestens eine erste Ringsegment (12a) und das mindestens eine zweite Ringsegment (12b) zur Ausbildung eines gasdichten Stoßes einander in Umfangsrichtung zumindest teilweise überlappende Endbereiche (13) aufweisen.

6. Turbinengehäuse (1) nach Anspruch 5,
**dadurch gekennzeichnet,**
**dass** mindestens ein erster Endbereich (13a) des mindestens einen ersten Ringsegments (12a) mindestens eine in Umfangsrichtung ausgebildete Aussparung (14) aufweist, und dass mindestens ein zweiter Endbereich (13b) des mindestens einen zweiten Ringsegments (12b) mindestens eine in Umfangsrichtung hervorstehende Zunge (15) aufweist, wobei die mindestens eine Zunge (15) zum formschlüssigen Eingriff in die mindestens eine Aussparung (14) ausgebildet ist.

7. Turbinengehäuse (1) nach einem der Ansprüche 4 bis 6,
**dadurch gekennzeichnet,**
**dass** der mindestens eine Dichtungsring (12) einen Ringaußendurchmesser aufweist, der zumindest in einem entlasteten Zustand größer als ein hinterer Gehäusesegmentinnendurchmesser des hinteren Gehäusesegments (4) ist.

8. Turbinengehäuse (1) nach einem der vorangegangenen Ansprüche,
**dadurch gekennzeichnet,**
**dass** in dem hinteren Vertikalflansch (6) eine Bohrung (16) ausgebildet ist, die einen Zwischenraum (17), der zwischen der Dichtungsvorrichtung (10) und dem vorderen Vertikalflansch (7) ausgebildet ist, mit einem zweiten Innenraumbereich (18b) des hinteren Gehäusesegments (4) fluidkommunizierend verbindet, wobei der zweite Innenraumbereich (18b) in Durchströmrichtung (D) hinter einem dem vorderen Gehäusesegment (3) unmittelbar benachbarten ersten Innenraumbereich (18a) des hinteren Gehäusesegments (4) angeordnet ist.

9. Turbinengehäuse (1) nach einem der vorangegangenen Ansprüche,
**dadurch gekennzeichnet,**
**dass** das erste vordere Gehäuseteilsegment (3a) als Hochdruckturbinengehäuseunterteil (19a) eines Hochdruckturbinengehäuses (19) des Turbinengehäuses (1), das zweite vordere Gehäuseteilsegment (3b) als Hochdruckturbinengehäuseoberteil (19b) des Hochdruckturbinengehäuses (19), das erste hintere Gehäuseteilsegment (4a) als Abdampfgehäuseunterteil (20a) eines Abdampfgehäuses (20) des Turbinengehäuses (1) und das zweite hintere Gehäuseteilsegment (4b) als Abdampfgehäuseoberteil (20b) des Abdampfgehäuses (20) ausgebildet sind.

10. Verfahren zur Montage einer Turbine mit einem Turbinengehäuse gemäß den Ansprüchen 5 und 9, aufweisend die folgenden Schritte:
- Einlegen des ersten Ringsegments (12a) des Dichtungsrings (12) in die Nut (11) des Vorsprungs (8) des Hochdruckturbinengehäuseunterteils (19a),
- Verbinden des Hochdruckturbinengehäuseunterteils (19a) mit dem Abdampfgehäuseunterteil (20a) zu einem Gehäuseunterteil,
- Einsetzen von Innenbauteilen der Turbine in das Gehäuseunterteil,
- Einlegen des zweiten Ringsegments (12b) des Dichtungsrings (12) in die Nut (11) des Vorsprungs (8) des Hochdruckturbinengehäuseoberteils (19b),
- Verbinden des Hochdruckturbinengehäuseoberteils (19b) mit dem Abdampfgehäuseoberteil (20b) zu einem Gehäuseoberteil, und
- Ablegen des Gehäuseoberteils auf dem Gehäuseunterteil.

## Claims

1. Turbine casing (1) for a turbine, in particular a steam turbine, having a front casing segment (3), configured about a turbine longitudinal axis (2), having a first front casing sub-segment (3a) as well as a second front casing sub-segment (3b), and a rear casing segment (4), configured about the turbine longitudinal axis (2), having a first rear casing sub-segment (4a) as well as a second rear casing sub-segment (4b), wherein the rear casing segment (4) in the flow direction (D) is disposed behind the front casing segment (3) and, while configuring a split cross joint (5), by way of a rear vertical flange (6) of the rear casing segment (4) is fastened to a front vertical flange (7) of the front casing segment (3) on the front casing segment (3), wherein
a protrusion (8) that on the front casing segment (3) surrounds the turbine longitudinal axis (2) is configured in a region of the front vertical flange (7), said protrusion (8) extending parallel or at least substantially parallel to the turbine longitudinal axis (2) and in the flow direction (D) protruding beyond the front vertical flange (7),
**characterized**
**in that** an encircling sealing device (10) which seals the protrusion (8) in relation to the rear casing segment (4) is disposed on an external side (9) of the protrusion (8) that faces away from the turbine longitudinal axis (2).

2. Turbine casing (1) according to Claim 1,
**characterized**
**in that** the protrusion (8) is configured so as to be hollow-cylindrical, or substantially hollow-cylindrical, respectively, or hollow-conical, or substantially hollow-conical, respectively.

3. Turbine casing (1) according to Claim 1 or 2,
**characterized**
**in that** the sealing device (10) is disposed and configured in such a manner so as to seal the protrusion (8) in relation to the rear vertical flange (6).

4. Turbine casing (1) according to one of the preceding claims,
**characterized**
**in that** at least one encircling groove (11) is configured in the external side (9) of the protrusion (8), wherein the sealing device (10) has at least one seal ring (12) which has at least one first ring segment (12a) and one second ring segment (12b), wherein the at least one seal ring (12) is at least partially received in the at least one groove (11) and in a sealing manner contacts the rear casing segment (4) in the radial direction (R) in terms of the turbine longitudinal axis (2).

5. Turbine casing (1) according to Claim 4,
**characterized**
**in that** the at least one first ring segment (12a) and the at least one second ring segment (12b) for configuring a gas-tight joint have end regions (13) that at least partially mutually overlap in the circumferential direction.

6. Turbine casing (1) according to Claim 5,
**characterized**
**in that** at least one first end region (13a) of the at least one first ring segment (12a) has at least one recess (14) that is configured in the circumferential direction, and
**in that** at least one second end region (13b) of the at least one second ring segment (12b) has at least one tongue (15) that projects in the circumferential direction, wherein the at least one tongue (15) is configured for engaging in a form-fitting manner in the at least one recess (14).

7. Turbine casing (1) according to one of Claims 4 to 6, **characterized**
**in that** the at least one seal ring (12) has a ring external diameter which at least in a de-stressed state is larger than a rear casing segment internal diameter of the rear casing segment (4).

8. Turbine casing (1) according to one of the preceding claims,
**characterized**
**in that** a bore (16) which fluidically connects an intermediate space (17) which is configured between the sealing device (10) and the front vertical flange (7) to a second interior region (18b) of the rear casing segment (4) is configured in the rear vertical flange (6), wherein the second interior region (18b) in the flow direction (D) is disposed behind a first interior region (18a) of the rear casing segment (4) that is directly adjacent to the front casing segment (3).

9. Turbine casing (1) according to one of the preceding claims,
**characterized**
**in that** the first front casing sub-segment (3a) is configured as a high-pressure turbine casing lower part (19a) of a high-pressure turbine casing (19) of the turbine casing (1), the second front casing sub-segment (3b) is configured as a high-pressure turbine casing upper part (19b) of the high-pressure turbine casing (19), the first rear casing sub-segment (4a) is configured as an exhaust steam casing lower part (20a) of an exhaust steam casing (20) of the turbine casing (1), and the second rear casing sub-segment (4b) is configured as an exhaust steam casing upper part (20b) of the exhaust steam casing (20).

10. Method for assembling a turbine having a turbine casing according to Claims 5 and 9, comprising the following steps:
- inserting the first ring segment (12a) of the seal ring (12) into the groove (11) of the protrusion (8) of the high-pressure turbine casing lower part (19a);
- connecting the high-pressure turbine casing lower part (19a) to the exhaust steam casing lower part (20a) so as to form a casing lower part;
- inserting interior components of the turbine into the casing lower part;
- inserting the second ring segment (12b) of the seal ring (12) into the groove (11) of the protrusion (8) of the high-pressure turbine casing upper part (19b);
- connecting the high-pressure turbine casing upper part (19b) to the exhaust steam casing upper part (20b) so as to form a casing upper part; and
- depositing the casing upper part onto the casing lower part.

## Revendications

1. Carter (1) de turbine pour une turbine, en particulier pour une turbine à vapeur, comportant un segment (3) avant de carter constitué autour d'un axe (2) longitudinal de la turbine et ayant un premier segment (3a) partiel avant de turbine, ainsi qu'un deuxième segment (3b) partiel avant de turbine et un segment (4) arrière de turbine constitué autour de l'axe (2) longitudinal de la turbine et ayant un premier segment (4a) partiel arrière de turbine, ainsi qu'un deuxième segment (4b) partiel arrière de turbine, dans lequel le segment (4) arrière de turbine est disposé, dans le sens (D) de passage, derrière le segment (3) avant de turbine ainsi que fixé au segment (3) avant de turbine avec formation d'un joint (5) partiel à la cardan par une bride (6) verticale arrière du segment (4) arrière de la turbine sur une bride (7) verticale avant du segment (3) avant de la turbine, dans lequel
dans une partie de la bride (7) verticale avant, est constituée, sur le segment (3) avant du carter, une saillie (8), qui entoure l'axe (2) longitudinal de la turbine, qui s'étend parallèlement ou du moins sensiblement parallèlement à l'axe (2) longitudinal de la turbine et qui dépasse, dans la direction (D) de passage, de la bride (7) verticale avant,
**caractérisé**
**en ce que**, d'un côté (9) extérieur, non tourné vers l'axe (2) longitudinal de la turbine, de la saillie (8) est monté un dispositif (10) d'étanchéité faisant le tour, qui rend la saillie (8) étanche vis-à-vis du segment (4) arrière du carter.

2. Carter (1) de turbine suivant la revendication 1,
**caractérisé**
**en ce que** la saillie (8) est en forme de cylindre creux ou sensiblement en forme de cylindre creux ou en forme de cône creux ou sensiblement en forme de cône creux.

3. Carter (1) de turbine suivant la revendication 1 ou 2, **caractérisé**
**en ce que** le dispositif (10) d'étanchéité est monté et constitué de manière à rendre étanche la saillie (8) contre la bride (6) verticale arrière.

4. Carter (1) de turbine suivant l'une des revendications précédentes,
**caractérisé**
**en ce que**, dans le côté (9) extérieur de la saillie (8), est constituée au moins une rainure (11) faisant le tour, dans lequel le dispositif (10) d'étanchéité a au moins une bague (12) d'étanchéité, qui a au moins un premier segment (12a) annulaire et un deuxième segment (12b) annulaire, dans lequel la au moins une bague (12) d'étanchéité est reçue au moins en partie dans la au moins la au moins une rainure (11) et contacte, en donnant de l'étanchéité, le segment (4) arrière du carter, dans la direction (R) radiale par rapport à l'axe (2) longitudinal de la turbine.

5. Carter (1) de turbine suivant la revendication 4,
**caractérisé**
**en ce que** le au moins un premier segment (12a) annulaire et le au moins un deuxième segment (12b) annulaire ont, pour la formation d'un joint étanche au gaz, des parties (13) d'extrémité se chevauchant l'une l'autre au moins en partie dans la direction du pourtour.

6. Carter (1) de turbine suivant la revendication 5,
**caractérisé**
**en ce que** la au moins une première partie (13a) d'extrémité du au moins un premier segment (12a) annulaire a au moins un évidement (14) constitué dans la direction du pourtour, et en ce qu'au moins une deuxième partie (13b) d'extrémité du au moins un deuxième segment (12b) annulaire a au moins une languette (15) en saillie dans la direction du pourtour, dans lequel la au moins une languette (15) est constituée pour la pénétration à complémentarité de forme dans le au moins un évidement (14).

7. Carter (1) de turbine suivant l'une des revendications 4 à 6,
**caractérisé**
**en ce que** la au moins une bague (12) d'étanchéité a un diamètre extérieur de bague, qui, au moins dans un état déchargé, est plus grand qu'un diamètre extérieur du segment (4) arrière du carter.

8. Carter (1) de turbine suivant l'une des revendications précédentes,
**caractérisé**
**en ce que**, dans la bride (6) verticale arrière, est constitué un trou (16), qui relie fluidiquement un espace (17) intermédiaire, constitué entre le dispositif (10) d'étanchéité et la bride (7) verticale avant, à une deuxième partie (18b) d'espace intérieur du segment (4) arrière du carter, dans lequel la deuxième partie (18b) d'espace intérieur est disposée, dans le sens (D) de passage, derrière une première partie (18a) d'espace intérieur du segment (4) arrière du carter directement voisine du segment (3) avant du carter.

9. Carter (1) de turbine suivant l'une des revendications précédentes,
**caractérisé**
**en ce que** le premier segment (3a) partiel avant du carter est constitué sous la forme d'une partie (19a) inférieure d'un carter (19) de turbine de haute pression du carter (1) de la turbine, le deuxième segment (3b) partiel avant du carter est constitué sous la forme d'une partie (19b) supérieure du carter (19) de turbine de haute pression, le premier segment (4a) partiel arrière du carter est constitué sous la forme d'une partie (20a) inférieure d'un carter (20) d'évacuation de la vapeur du carter (1) de la turbine et le deuxième segment (4b) partiel arrière du carter est constitué sous la forme d'une partie (20b) supérieure du carter (20) d'évacuation de la vapeur.

10. Procédé de montage d'une turbine ayant un carter de turbine suivant les revendications 5 et 9, comportant les stades suivants :
- introduction du premier segment (12a) annulaire de la bague (12) d'étanchéité dans la rainure (11) de la saillie (8) de la partie (19a) inférieure du carter de turbine de haute pression,
- assemblage de la partie (19a) inférieure du carter de turbine de haute pression à la partie (20a) inférieure de carter d'évacuation de la vapeur en une partie inférieure de carter,
- insertion de composants intérieurs de la turbine dans la partie inférieure du carter,
- insertion du deuxième segment (12b) annulaire de la bague (12) d'étanchéité dans la rainure (11) de la saillie (8) de la partie (19b) supérieure de carter de turbine de haute pression,
- assemblage de la partie (19b) supérieure de carter de turbine de haute pression à la partie (20b) supérieure d'évacuation de la vapeur en une partie supérieure de carter, et
- pose de la partie supérieure du carter sur la partie inférieure du carter.
